# EUROPÄISCHE PATENTANMELDUNG

(11) **EP 4 844 993 A1**
(43) Veröffentlichungstag der Anmeldung: **25.11.2026**
(21) Anmeldenummer: 26171909.0
(22) Anmeldetag: 13.04.2026
(51) Int. Cl.: H02K 5/16, F16C 35/02, G01M 17/00, H02K 5/26, H02K 15/90

(54) **ANTRIEBSMODUL FÜR EINEN ANTRIEBSSTRANGPRÜFSTAND**

(30) Priorität: 17.04.2025 DE 102025115227
(71) Anmelder: ZF Friedrichshafen AG, 88046 Friedrichshafen (DE)
(72) Erfinder: Hell, Christian, 94107 Untergriesbach (DE); Juse, Matthias, 4784 Schardenberg (AT)
(74) Vertreter: ZF Friedrichshafen AG

(57) **Zusammenfassung**

Die Erfindung betrifft ein Antriebsmodul (100) für einen Antriebsstrangprüfstand, wobei das Antriebsmodul (100) einen Elektromotor (10) und ein Grundgestell (20) aufweist, wobei der Elektromotor (10) ein hülsenartiges Gehäuse (13) mit einem vorderen Lagerschild (11) und einem hinteren Lagerschild (12) aufweist und das Gehäuse (13) einer temperaturabhängigen Längenausdehnung unterworfen ist, wobei das vordere Lagerschild (11) im Grundgestell (20) gehalten ist. Das erfindungsgemäße Antriebsmodul (100) zeichnet sich dadurch aus, dass das hintere Lagerschild (12) im Grundgestell (20) über ein als Kugelbuchse ausgebildetes Ausgleichselement (30) axial beweglich gehalten ist, dass die Kugelbuchse eine innere Lauffläche (31), eine äußere Lauffläche (32) und zwischen diesen angeordnete Kugeln (33) aufweist, dass die innere Lauffläche (31) drehfest am Elektromotor (10) angeordnet ist, dass die äußere Lauffläche (32) drehfest am Grundgestell (20) angeordnet ist und dass die innere Lauffläche (31) gegenüber der äußeren Lauffläche (32) drehfest gehalten ist. Die Erfindung betrifft weiterhin einen entsprechenden Antriebsstrangprüfstand.

## Beschreibung

Die Erfindung betrifft ein Antriebsmodul für einen Antriebsstrangprüfstand gemäß dem Oberbegriff von Anspruch 1 sowie einen entsprechenden Antriebsstrangprüfstand.

Im Stand der Technik ist es bekannt, dass Antriebsstrangprüfstände zum Prüfen von elektrischen Kraftfahrzeugantriebssträngen aufgrund der hohen möglichen Drehzahlen von Elektromotoren für hohe und sehr hohe Eingangsdrehzahlen ausgelegt sein müssen. Diese hohen Eingangsdrehzahlen erzeugen jedoch Abwärme, was zu Verlagerungen der Komponenten des Elektromotors durch thermische Ausdehnung der Komponenten führen kann.

Dies wiederum führt dazu, dass sich die Lage des Elektromotors im Grundgestell verändert und z. B. die Flucht zu Komponenten im Antriebsstrang wie Lagerungen, Kupplungen, Messflanschen usw. verloren geht, was sich negativ auf die Lebensdauer der Lager auswirkt. Weiterhin kann es zu mechanischen Verspannungen des Elektromotors und zu einer Verlagerung oder Verformung von Lagersitzen kommen.

Aus der DE 10 2024 208 053 A1 ist ein in einem Grundgestell angeordneter Elektromotor bekannt, bei dem ein hülsenartiges Gehäuse des Elektromotors in einer Motoraufnahme des Grundgestells angeordnet ist, wobei Gehäuse und Stator ein axiales Spiel zu dem Grundgestell aufweisen und um das axiale Spiel axial bewegbar sowie drehfest am Grundgestell angeordnet sind. Dabei kann die drehfeste Anordnung beispielsweise über ein axial weiches und in Umfangsrichtung steifes Verbindungselement, über eine Ringmembran, über eine mäanderartige Ringmembran oder über eine Mitnehmeranordnung erfolgen. Hierdurch können thermisch bedingte Längenausdehnungen des Elektromotors aufgenommen werden.

Es ist eine Aufgabe der Erfindung, ein alternatives Antriebsmodul für einen Antriebsstrangprüfstand vorzuschlagen.

Diese Aufgabe wird erfindungsgemäß durch das Antriebsmodul für einen Antriebsstrangprüfstand gemäß Anspruch 1 gelöst. Vorteilhafte Ausgestaltungen ergeben sich aus den Unteransprüchen.

Die Erfindung betrifft ein Antriebsmodul für einen Antriebsstrangprüfstand, wobei das Antriebsmodul einen Elektromotor und ein Grundgestell aufweist, wobei der Elektromotor ein hülsenartiges Gehäuse mit einem vorderen Lagerschild und einem hinteren Lagerschild aufweist und das Gehäuse einer temperaturabhängigen Längenausdehnung unterworfen ist, wobei das vordere Lagerschild im Grundgestell gehalten ist.

Erfindungsgemäß ist vorgesehen, dass das hintere Lagerschild im Grundgestell über ein Ausgleichselement axial beweglich gehalten ist, dass das Ausgleichselement dazu ausgebildet ist, eine temperaturbedingte Relativbewegung zwischen dem Elektromotor und dem Grundgestell in axialer Richtung zu ermöglichen, dass das Ausgleichselement an dem hinteren Lagerschild und/oder dem Grundgestell angeordnet ist und dass das Ausgleichselement das hintere Lagerschild radial führt.

Somit kann über das Ausgleichselement eine Längenausdehnung des Elektromotors zugelassen werden, wodurch sich insbesondere bei erhöhten Betriebstemperaturen des Elektromotors ein reduzierter Verschleiß und eine größere Laufruhe ergeben.

Zugleich kann durch die radiale Führung des hinteren Lagerschilds eine präzise Lagerung des Elektromotors im Grundgestell erreicht werden, während in Axialrichtung die thermisch bedingte Relativbewegung zugelassen wird. Hierdurch können insbesondere mechanische Verspannungen, unzulässige Lagerbelastungen sowie eine Beeinträchtigung der Flucht zu weiteren Komponenten des Antriebsstrangs vermieden werden.

Gemäß einer vorteilhaften Ausführungsform der Erfindung ist vorgesehen, dass das Ausgleichselement als Kugelbuchse ausgebildet ist.

Durch die Ausbildung des Ausgleichselements als Kugelbuchse ist eine besonders verschleißarme axiale Beweglichkeit ermöglicht. Ferner kann hierdurch eine besonders präzise radiale Führung bei gleichzeitig geringer Reibung erzielt werden.

Gemäß einer weiteren vorteilhaften Ausführungsform der Erfindung ist vorgesehen, dass das Ausgleichselement als Gleitlageranordnung, Linearführung, Buchse, Hülsenanordnung oder Wälzlageranordnung ausgebildet ist.

Hierdurch kann das Ausgleichselement in konstruktiv besonders einfacher Weise an unterschiedliche Einbauräume, Belastungsanforderungen und gewünschte Führungs- bzw. Reibeigenschaften angepasst werden.

Insbesondere kann je nach Anwendungsfall ein besonders kostengünstiger, besonders kompakter oder besonders robust ausgeführter Aufbau gewählt werden.

Gemäß einer besonders vorteilhaften Ausführungsform der Erfindung ist vorgesehen, dass die Kugelbuchse eine innere Lauffläche, eine äußere Lauffläche und zwischen diesen angeordnete Kugeln aufweist.

Hierdurch wird ein besonders günstiger Aufbau für eine axial bewegliche und zugleich radial führende Lagerung geschaffen. Die zwischen den Laufflächen angeordneten Kugeln ermöglichen dabei eine reibungsarme Relativbewegung in Axialrichtung.

Gemäß einer weiteren vorteilhaften Ausführungsform der Erfindung ist vorgesehen, dass die innere Lauffläche drehfest am Elektromotor angeordnet ist, dass die äußere Lauffläche drehfest am Grundgestell angeordnet ist und dass die innere Lauffläche gegenüber der äußeren Lauffläche drehfest gehalten ist.

Hierdurch kann zusätzlich zu der axialen Beweglichkeit eine sichere Übertragung von Umfangskräften bzw. Drehmomenten erreicht werden. Somit kann eine definierte Abstützung des Elektromotors am Grundgestell verwirklicht werden, ohne die thermisch erforderliche axiale Relativbewegung aufzuheben.

Gemäß einer besonders vorteilhaften Ausführungsform der Erfindung ist vorgesehen, dass die innere Lauffläche gegenüber der äußeren Lauffläche mittels mindestens einer Verbindungsstrebe drehfest gehalten ist.

Dies stellt insbesondere bei einer Ausführung des Ausgleichselements als Kugelbuchse eine einfache, robuste und effiziente Möglichkeit dar, die innere Lauffläche mit der äußeren Lauffläche drehfest zu koppeln. Über die mindestens eine Verbindungsstrebe kann das Drehmoment des Elektromotors in das Grundgestell eingeleitet werden, während die axiale Beweglichkeit des hinteren Lagerschilds weiterhin zugelassen bleibt.

Eine derartige Verbindungsstrebe kann beispielsweise aus Blech, insbesondere aus Stahlblech, ausgebildet sein.

Gemäß einer besonders vorteilhaften Ausführungsform der Erfindung ist vorgesehen, dass die mindestens eine Verbindungsstrebe an axialen Enden der inneren Lauffläche und der äußeren Lauffläche angeordnet ist.

Da die mindestens eine Verbindungsstrebe somit abseits der eigentlichen Lauf- bzw. Lagerflächen angeordnet ist, wird deren Funktionalität nicht beeinträchtigt. Auch die Anlageflächen der inneren Lauffläche an den Elektromotor und der äußeren Lauffläche an das Grundgestell werden nicht reduziert oder anderweitig nachteilig beeinflusst. Zudem kann auf diese Weise die axiale Beweglichkeit besonders gut erhalten werden.

Gemäß einer weiteren vorteilhaften Ausführungsform der Erfindung ist vorgesehen, dass das vordere Lagerschild in Umfangsrichtung vollständig vom Grundgestell gehalten ist.

Somit kann das Auftreten von Schwingungen im Elektromotor effizient vermieden werden bzw. können auftretende Schwingungen effizient gedämpft werden. Ferner kann das vordere Lagerschild hierdurch die Lage des Elektromotors im Grundgestell besonders präzise definieren.

Gemäß einer besonders vorteilhaften Ausführungsform der Erfindung ist vorgesehen, dass das vordere Lagerschild eine äußere Konusform aufweist und das Grundgestell eine innere Konusform zur Aufnahme des vorderen Lagerschilds aufweist.

Dadurch vergrößert sich die Anlagefläche des Elektromotors an das Grundgestell, was zu einer weiteren Verbesserung der Schwingungsdämpfung und der radialen Steifigkeit führt. Zugleich kann die Lage des Elektromotors im Bereich des vorderen Lagerschilds besonders genau definiert werden. Die konische Aufnahme ermöglicht insbesondere eine spielfreie Verbindung auf bis zu 360°.

Gemäß einer weiteren vorteilhaften Ausführungsform der Erfindung ist vorgesehen, dass das Ausgleichselement das hintere Lagerschild radial spielfrei und axial beweglich im Grundgestell hält.

Somit ist auf der Seite des hinteren Lagerschilds eine radiale Führung mit hoher Steifigkeit gegeben, während gleichzeitig die temperaturabhängige Längenausdehnung des Elektromotors zugelassen wird.

Dadurch können insbesondere unzulässige Lagerbelastungen vermieden werden, ohne dass die Koaxialität der Lagerung beeinträchtigt wird. Die Aufnahme des hinteren Lagerschilds ist somit frei in Axialrichtung, jedoch vorzugsweise spielfrei in Radialrichtung. Dies kann insbesondere bei einer als Kugelbuchse ausgebildeten Ausführung in besonders vorteilhafter Weise realisiert werden.

Gemäß einer weiteren vorteilhaften Ausführungsform der Erfindung ist vorgesehen, dass die mindestens eine Verbindungsstrebe derart ausgebildet ist, dass sie eine Drehmomentübertragung zwischen Elektromotor und Grundgestell ermöglicht, ohne die axiale Beweglichkeit des hinteren Lagerschilds wesentlich zu behindern.

Hierdurch ist eine funktionale Trennung zwischen axialem Ausgleich und Drehmomentabstützung geschaffen. Während das Ausgleichselement die axiale Relativbewegung zulässt, sorgt die mindestens eine Verbindungsstrebe für die drehfeste Kopplung. Bei einer Ausführung des Ausgleichselements als Kugelbuchse kann hierdurch ein besonders günstiges mechanisches Verhalten des Antriebsmoduls erzielt werden.

Gemäß einer weiteren vorteilhaften Ausführungsform der Erfindung ist vorgesehen, dass das Ausgleichselement am hinteren Lagerschild angeordnet ist.

Dies stellt eine konstruktiv besonders einfache und kompakte Lösung dar.

Die thermische Längenausdehnung des Elektromotors kann dann insbesondere zwischen dem im Grundgestell definierend aufgenommenen vorderen Lagerschild und dem axial beweglich gehaltenen hinteren Lagerschild ausgeglichen werden. Grundsätzlich ist es jedoch auch möglich, dass das Ausgleichselement dem Grundgestell zugeordnet ist oder zwischen dem hinteren Lagerschild und dem Grundgestell so angeordnet ist, dass es an beiden Bauteilen mitwirkt.

Gemäß einer weiteren vorteilhaften Ausführungsform der Erfindung ist vorgesehen, dass das Ausgleichselement eine drehfeste Kopplung zwischen Elektromotor und Grundgestell bereitstellt oder mit einer gesonderten drehfesten Kopplung zusammenwirkt.

Hierdurch kann die Funktion der Drehmomentabstützung entweder unmittelbar durch das Ausgleichselement selbst oder mittelbar durch ein mit dem Ausgleichselement zusammenwirkendes zusätzliches Bauteil realisiert werden. Dies eröffnet konstruktive Freiheitsgrade bei der Auslegung des Antriebsmoduls.

Die Erfindung betrifft weiterhin einen Antriebsstrangprüfstand, umfassend ein erfindungsgemäßes Antriebsmodul.

Nachfolgend wird die Erfindung anhand von in den Figuren dargestellten Ausführungsformen beispielhaft erläutert.

Es zeigen:
Fig. 1 beispielhaft und schematisch einen Ausschnitt eines erfindungsgemäßen Antriebsmoduls,
Fig. 2 die Kugelbuchse ausschnittsweise in einer vergrößerten Darstellung,
Fig. 3 beispielhaft und schematisch eine Verbindungsstrebe, welche die innere Lauffläche mit der äußeren Lauffläche drehfest verbindet, und
Fig. 4 beispielhaft und schematisch ein als Kugelbuchse ausgebildetes Ausgleichselement mit einer inneren Lauffläche, mit einer äußeren Lauffläche und mit dazwischen angeordneten Kugeln.

Gleiche Gegenstände, Funktionseinheiten und vergleichbare Komponenten sind figurenübergreifend mit den gleichen Bezugszeichen bezeichnet. Diese Gegenstände, Funktionseinheiten und vergleichbaren Komponenten sind hinsichtlich ihrer technischen Merkmale identisch ausgeführt, sofern sich aus der Beschreibung nicht explizit oder implizit etwas anderes ergibt.

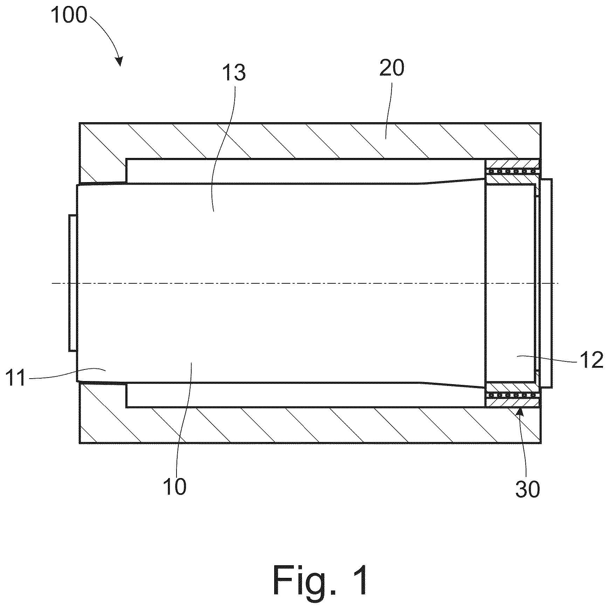

Fig. 1 zeigt beispielhaft und schematisch einen Ausschnitt eines erfindungsgemäßen Antriebsmoduls 100.

Zu sehen ist der Elektromotor 10 mit einem vorderen Lagerschild 11, einem hinteren Lagerschild 12 und einem hülsenartigen Gehäuse 13. Der Elektromotor 10 ist in einem Grundgestell 20 angeordnet. Das vordere Lagerschild 11 ist beispielsgemäß in Umfangsrichtung vollständig vom Grundgestell 20 gehalten. Beispielsgemäß weist das vordere Lagerschild 11 eine äußere Konusform auf und das Grundgestell 20 eine entsprechende innere Konusform zur Aufnahme des vorderen Lagerschilds 11. Hierdurch ist im Bereich des vorderen Lagerschilds 11 eine definierende, spielfreie Aufnahme des Elektromotors 10 im Grundgestell 20 geschaffen.

Der Elektromotor 10 ist einer temperaturabhängigen Längenausdehnung unterworfen, d. h. bei zunehmenden Temperaturen vergrößert sich der axiale Abstand zwischen dem vorderen Lagerschild 11 und dem hinteren Lagerschild 12. Um aus der Längenausdehnung resultierende mechanische Verspannungen und sich daraus ergebende Nachteile zu vermeiden, weist das Antriebsmodul 100 ein Ausgleichselement 30 auf, welches das hintere Lagerschild 12 axial beweglich im Grundgestell 20 hält. Somit ist eine Längenausdehnung des Elektromotors 10 ohne mechanische Verspannungen möglich. Beispielsgemäß ist das Ausgleichselement 30 als Kugelbuchse ausgebildet.

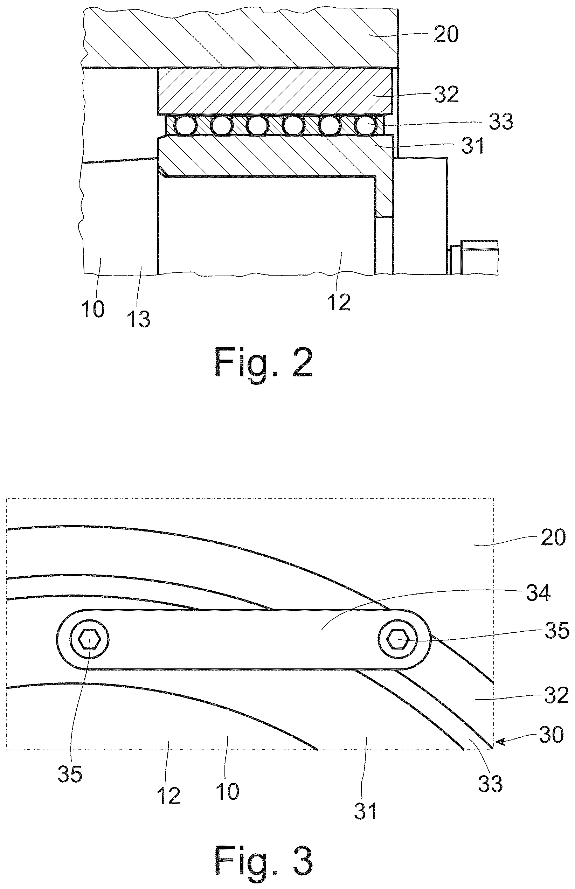

Fig. 2 zeigt die Kugelbuchse 30 ausschnittsweise in einer vergrößerten Darstellung.

Wie zu sehen ist, umfasst die Kugelbuchse 30 eine innere Lauffläche 31, eine äußere Lauffläche 32 und eine Vielzahl von Kugeln 33. Die innere Lauffläche 31 ist drehfest am Elektromotor 10, insbesondere am hinteren Lagerschild 12, angeordnet. Die äußere Lauffläche 32 ist drehfest am Grundgestell 20 angeordnet. Die Kugeln 33 sind zwischen der inneren Lauffläche 31 und der äußeren Lauffläche 32 angeordnet und ermöglichen eine axiale Relativbewegung zwischen diesen Laufflächen. Auf diese Weise ist das hintere Lagerschild 12 radial geführt und zugleich axial beweglich gehalten.

Fig. 3 zeigt beispielhaft und schematisch eine Verbindungsstrebe 34, welche die innere Lauffläche 31 mit der äußeren Lauffläche 32 drehfest verbindet. Wie zu sehen ist, ist die Verbindungsstrebe 34 beispielsgemäß an jeweils einem axialen Ende der inneren Lauffläche 31 und der äußeren Lauffläche 32 angeordnet. Die Verbindungsstrebe 34 ist beispielsgemäß jeweils über eine Schraube 35 mit der inneren Lauffläche 31 und der äußeren Lauffläche 32 verbunden. Über die Verbindungsstrebe 34 kann ein Drehmoment von dem Elektromotor 10 auf das Grundgestell 20 übertragen werden, ohne dass die axiale Beweglichkeit wesentlich beeinträchtigt wird. Die Anzahl der Verbindungsstreben 34 ist grundsätzlich beliebig. Zweckmäßig kann eine gerade Anzahl vorgesehen sein, insbesondere paarweise gegenüberliegend.

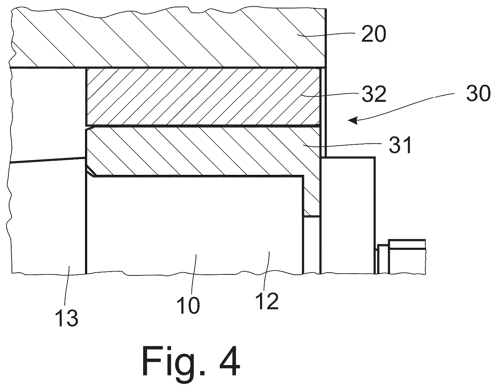

Fig. 4 zeigt beispielhaft und schematisch das als Kugelbuchse 30 ausgebildete Ausgleichselement mit der inneren Lauffläche 31, der äußeren Lauffläche 32 und den dazwischen angeordneten Kugeln 33. Die innere Lauffläche 31 ist hierbei dem Elektromotor 10, insbesondere dem hinteren Lagerschild 12, zugeordnet, während die äußere Lauffläche 32 dem Grundgestell 20 zugeordnet ist. Die Kugeln 33 ermöglichen eine axial gerichtete Relativbewegung zwischen der inneren Lauffläche 31 und der äußeren Lauffläche 32, so dass die temperaturabhängige Längenausdehnung des Elektromotors 10 aufgenommen werden kann.

### Bezugszeichen

10 Elektromotor
11 vorderes Lagerschild
12 hinteres Lagerschild
13 Gehäuse
20 Grundgestell
30 Ausgleichselement, Kugelbuchse
31 innere Lauffläche
32 äußere Lauffläche
33 Kugel
34 Verbindungsstrebe
35 Schraube
100 Antriebsmodul

## Patentansprüche

1. Antriebsmodul (100) für einen Antriebsstrangprüfstand,
wobei das Antriebsmodul (100) einen Elektromotor (10) und ein Grundgestell (20) aufweist,
wobei der Elektromotor (10) ein hülsenartiges Gehäuse (13) mit einem vorderen Lagerschild (11) und einem hinteren Lagerschild (12) aufweist und das Gehäuse (13) einer temperaturabhängigen Längenausdehnung unterworfen ist,
wobei das vordere Lagerschild (11) im Grundgestell (20) gehalten ist, **dadurch gekennzeichnet,**
**dass** das hintere Lagerschild (12) im Grundgestell (20) über ein Ausgleichselement (30) axial beweglich gehalten ist,
**dass** das Ausgleichselement (30) dazu ausgebildet ist, eine temperaturbedingte Relativbewegung zwischen dem Elektromotor (10) und dem Grundgestell (20) in axialer Richtung zu ermöglichen,
**dass** das Ausgleichselement (30) an dem hinteren Lagerschild (12) und/oder dem Grundgestell (20) angeordnet ist und
**dass** das Ausgleichselement (30) das hintere Lagerschild (12) radial führt.

2. Antriebsmodul (100) nach Anspruch 1,
**dadurch gekennzeichnet, dass** das Ausgleichselement (30) als Kugelbuchse ausgebildet ist.

3. Antriebsmodul (100) nach Anspruch 1,
**dadurch gekennzeichnet, dass** das Ausgleichselement (30) als Gleitlageranordnung, Linearführung, Buchse, Hülsenanordnung oder Wälzlageranordnung ausgebildet ist.

4. Antriebsmodul (100) nach Anspruch 2,
**dadurch gekennzeichnet, dass** die Kugelbuchse eine innere Lauffläche (31), eine äußere Lauffläche (32) und zwischen diesen angeordnete Kugeln (33) aufweist.

5. Antriebsmodul (100) nach Anspruch 4,
**dadurch gekennzeichnet, dass** die innere Lauffläche (31) drehfest am Elektromotor (10) angeordnet ist, dass die äußere Lauffläche (32) drehfest am Grundgestell (20) angeordnet ist und dass die innere Lauffläche (31) gegenüber der äußeren Lauffläche (32) drehfest gehalten ist.

6. Antriebsmodul (100) nach Anspruch 5,
**dadurch gekennzeichnet, dass** die innere Lauffläche (31) gegenüber der äußeren Lauffläche (32) mittels mindestens einer Verbindungsstrebe (34) drehfest gehalten ist.

7. Antriebsmodul (100) nach Anspruch 6,
**dadurch gekennzeichnet, dass** die mindestens eine Verbindungsstrebe (34) an axialen Enden der inneren Lauffläche (31) und der äußeren Lauffläche (32) angeordnet ist.

8. Antriebsmodul (100) nach einem der vorhergehenden Ansprüche,
**dadurch gekennzeichnet, dass** das vordere Lagerschild (11) in Umfangsrichtung vollständig vom Grundgestell (20) gehalten ist.

9. Antriebsmodul (100) nach Anspruch 8,
**dadurch gekennzeichnet, dass** das vordere Lagerschild (11) eine äußere Konusform aufweist und das Grundgestell (20) eine innere Konusform zur Aufnahme des vorderen Lagerschilds (11) aufweist.

10. Antriebsmodul (100) nach einem der vorhergehenden Ansprüche,
**dadurch gekennzeichnet, dass** das Ausgleichselement (30) das hintere Lagerschild (12) radial spielfrei und axial beweglich im Grundgestell (20) hält.

11. Antriebsmodul (100) nach einem der Ansprüche 6 bis 10,
**dadurch gekennzeichnet, dass** die mindestens eine Verbindungsstrebe (34) derart ausgebildet ist, dass sie eine Drehmomentübertragung zwischen Elektromotor (10) und Grundgestell (20) ermöglicht, ohne die axiale Beweglichkeit des hinteren Lagerschilds (12) wesentlich zu behindern.

12. Antriebsmodul (100) nach einem der vorhergehenden Ansprüche,
**dadurch gekennzeichnet, dass** das Ausgleichselement (30) am hinteren Lagerschild (12) angeordnet ist.

13. Antriebsmodul (100) nach einem der Ansprüche 1 bis 12,
**dadurch gekennzeichnet, dass** das Ausgleichselement (30) eine drehfeste Kopplung zwischen Elektromotor (10) und Grundgestell (20) bereitstellt oder mit einer gesonderten drehfesten Kopplung zusammenwirkt.

14. Antriebsstrangprüfstand,
umfassend ein Antriebsmodul (100) nach einem der Ansprüche 1 bis 13.
